# NOUVEAU FASCICULE DE BREVET EUROPEEN

(11) **EP 4 082 752 B2**
(45) Date de publication et mention de la décision concernant l'opposition: **04.11.2026**
(45) Mention de la délivrance du brevet: 12.06.2024
(21) Numéro de dépôt: 22170199.8
(22) Date de dépôt: 27.04.2022
(51) Int. Cl.: B29C 49/58, B29C 49/06

(54) **TUYERE POUR UNITE DE SOUFFLAGE, COMPRENANT UN EMBOUT INTERCHANGEABLE**
DÜSE FÜR EINE BLASEINHEIT, DIE EINEN AUSTAUSCHBAREN STUTZEN UMFASST
PIPE FOR BLOWING UNIT, COMPRISING AN INTERCHANGEABLE TIP

(30) Priorité: 30.04.2021 FR 2104540
(43) Date de publication de la demande: 02.11.2022
(73) Titulaire: Sidel Participations, 76930 Octeville Sur Mer (FR)
(72) Inventeur: DUCLOS, Yves-Alban, 76930 OCTEVILLE-SUR-MER (FR)
(74) Mandataire: Sidel Group

(56) Documents cités:
- EP-B1- 3 022 039
- US-A1- 2016 339 623
- US-A1- 2019 168 438
- ANONYMOUS: "Shore durometer - Wikipedia, the free encyclopedia", 2 August 2016 (2016-08-02), pages 4 - 4, XP055294993, Retrieved from the Internet <URL:https://en.wikipedia.org/w/index.php?title=Shore_durometer&printable=yes> [retrieved on 20160811]

## Description

Le domaine de l'invention est celui de la conception et de la fabrication des machines de fabrication de récipients en matière plastique par soufflage ou étirage/soufflage.

Plus précisément, l'invention concerne en particulier une tuyère pour unité de soufflage, comprenant un embout interchangeable.

Lors de la fabrication de récipients en matière plastique, un fluide sous pression (généralement de l'air) est injecté dans une préforme préalablement chauffée au-delà d'une température de transition vitreuse.

Pour cela, en sortie d'une unité de chauffage permettant leur chauffe, les préformes sont alors introduites dans une unité de soufflage pour y être soufflées ou étirées/soufflées, afin de leur conférer une forme définitive.

Par préforme, il est entendu à la fois des ébauches n'ayant subi aucune déformation, et des ébauches ayant déjà subi une première déformation, autrement dit, des récipients qui ne sont pas à leur forme définitive.

Chaque préforme est reçue dans un moule présentant une cavité à l'empreinte du récipient final à fabriquer. Seule une partie de la préforme, le col qui a déjà sa forme définitive et qui comprend des moyens de retenue d'un bouchon, dépasse du moule.

Une tuyère vient alors coiffer le col de la préforme, en appui contre le moule, pour injecter le fluide sous pression à l'intérieur de la préforme.

Une unité de soufflage comprend une pluralité de moules et de tuyères permettant la fabrication simultanée de plusieurs récipients.

Sur une même ligne de production de récipients, différents types de récipients peuvent être fabriqués.

Les récipients peuvent notamment différer dans leur aspect extérieur en présentant des bossage ou creux différents, ou dans leur contenance, ce qui impacte à la fois la hauteur et le diamètre des récipients.

Ces différentes caractéristiques ont alors un impact sur le moule qui doit être utilisé, chaque moule permettant la fabrication d'un récipient présentant un aspect extérieur et une contenance particulière.

Par ailleurs, les récipients peuvent également différer les uns des autres par leur utilisation. Dans le cas de récipients destinés à contenir des boissons, comme les bouteilles, le contenu peut impacter l'aspect extérieur et la contenance des récipients mais également le col des récipients.

A titre d'exemple, pour des boissons plates (par exemple l'eau non gazeuse), ou des boissons carbonatées, le col des récipients est généralement de petit diamètre. En revanche, pour les boissons chaudes lors du remplissage des récipients (par exemple les jus de fruits ou encore les thés) le col des récipients est généralement de gros diamètre, ou à tout le moins supérieur à celui des récipients pour boissons plates ou carbonatées.

L'unité de soufflage doit dont être adaptée tant à la fabrication des récipients présentant un col de petit diamètre qu'à la fabrication des récipients présentant un col de gros diamètre.

Pour cela, la tuyère comprend classiquement une partie fixe solidaire d'un bâti de l'unité de soufflage, et une partie interchangeable.

La partie interchangeable permet l'adaptabilité de la tuyère aux différents types de récipients à fabriquer, et notamment aux différents cols.

Toutefois, le changement des parties interchangeables des tuyères peut s'avérer particulièrement long et complexe pour les opérateurs.

Cela requiert donc une immobilisation longue de l'unité de soufflage, ce qui impacte négativement les cadences de production.

Pour réduire l'impact négatif sur les cadences de production, le document de brevet publié sous le numéro EP 2 349 679 propose une tuyère intégrant une solution de changement rapide de la partie interchangeable.

Cette tuyère comprend une partie fixe et une partie interchangeable montée de manière amovible sur la partie fixe.

La partie fixe comprend des saillies radiales et la partie mobile comprend trois encoches en L destinées à recevoir les saillies radiales de la partie fixe (à la façon des assemblages « baïonnette »). Les encoches présentent une portion axiale par laquelle une saillie est introduite dans l'encoche, et une portion périphérique communiquant avec la portion axiale et dans laquelle est reçue une saillie après rotation de la partie interchangeable.

La fixation de la partie interchangeable sur la partie fixe se fait donc par insertion dans la portion axiale des saillies radiales dans les encoches de la partie interchangeable puis rotation de la partie interchangeable pour positionner les saillies radiales dans la portion périphérique des encoches.

En outre, cette tuyère intègre un mécanisme de verrouillage comprenant :
- un organe de verrouillage monté radialement mobile sur la partie fixe, et
- un logement de réception pratiqué dans la partie interchangeable et destinée à recevoir l'organe de verrouillage lorsque les saillies sont dans les portions périphériques des encoches.

L'organe de verrouillage est couplé à un organe de rappel pour l'écarter radialement de la partie fixe.

Une telle tuyère n'est pas sans inconvénients.

En effet, lors de la mise en place ou du retrait de la partie interchangeable, l'opérateur doit avoir recours à ses deux mains.

Avec l'une de ses mains, il manipule le mécanisme de verrouillage pour repousser radialement l'organe de verrouillage contre la partie fixe, et avec l'autre main il positionne et fait tourner la partie mobile sur la partie fixe.

Lorsque les saillies sont reçues dans la portion périphérique des encoches, l'opérateur peut relâcher le mécanisme de verrouillage ce qui provoque la venue dans le logement de l'organe de verrouillage grâce à l'organe de rappel.

En fonction de la position relative de l'opérateur par rapport à la tuyère, l'accès au mécanisme de verrouillage et/ou la mise en place de la partie interchangeable peuvent être rendus difficiles.

Par ailleurs pour permettre l'assemblage de la partie interchangeable sur la partie fixe, un jeu fonctionnel doit être prévu entre la partie fonctionnelle et la partie fixe.

Un tel jeu fonctionnel peut engendrer un risque de fuite de fluide sous pression lors du soufflage ou de l'étirage/soufflage d'un récipient.

En outre, ce jeu fonctionnel peut entrainer une usure prématurée de la tuyère par frottement de la partie interchangeable sur la partie fixe, frottements notamment engendrés par les vibrations lors de la production de récipients.

L'invention a notamment pour objectif de palier les inconvénients de l'art antérieur.

Les publications US2016339623A1 et US20191684A1 divulguent des unités selon le préambule de la revendication 1.

Plus précisément, l'invention a pour objectif de proposer une tuyère fiable dans le temps comparativement aux tuyères selon l'art antérieur.

L'invention a également pour objectif de fournir une telle tuyère dont les risques de fuite de fluide sous pression sont limités voire supprimés durant la production de récipients.

L'invention a en outre pour objectif de fournir une telle tuyère dont l'assemblage de la partie interchangeable sur la partie fixe est rapide et simple pour un opérateur.

Ces objectifs, ainsi que d'autres qui apparaîtront par la suite, sont atteints grâce à l'invention qui a pour objet une unité de soufflage intégrant au moins un moule et une tuyère pour injecter un fluide sous pression dans le moule, la tuyère comprenant :
- un corps intégrant un fût s'étendant selon un axe principal, le corps portant des premiers moyens de retenue ;
- un embout tubulaire, abouté au corps selon l'axe principal, et portant des deuxièmes moyens de retenue coopérant avec les premiers moyens de retenue pour limiter un débattement axial de l'embout par rapport au corps, la tuyère étant mobile entre :
- une position de soufflage dans laquelle la tuyère coopère avec le moule et l'embout est plaqué contre le moule par le corps, et
- une position d'attente dans laquelle la tuyère est écartée du moule, l'embout étant espacé du corps et définissant un jeu fonctionnel avec le corps, la tuyère comprenant, en outre, un organe d'étanchéité élastiquement déformable intercalé, selon l'axe principal, entre le corps et l'embout pour combler le jeu fonctionnel, l'organe d'étanchéité étant comprimé entre le corps et l'embout, et tendant à écarter axialement l'embout par rapport au corps, remarquable en ce que les premiers moyens de retenue se présentent sous la forme d'encoches en L et les deuxièmes moyens de retenue se présentent sous la forme de saillies radiales et en ce que le corps comprend une bague mobile en rotation sur le fût selon l'axe principal, les premiers moyens de retenue étant portés par la bague.

L'organe d'étanchéité permet d'assurer la tenue de l'embout sur le corps et de limiter (voire de supprimer) les risques de fuite de fluide sous pression.

En effet, puisque l'organe d'étanchéité est élastiquement déformable, il peut être compressé lors du montage de l'embout sur le corps et tendre à recouvrer son état initial, c'est-à-dire non comprimé, ce qui repousse et écarte l'embout tubulaire du corps. L'embout reste solidaire du corps grâce aux premiers moyens de retenue et aux deuxièmes moyens de retenue qui coopèrent.

Par ailleurs, en tendant à recouvrer son état initial, l'organe d'étanchéité forme une barrière au passage du fluide sous pression qui traverse le corps et l'embout lors de son injection pour former un récipient.

En outre, l'organe d'étanchéité de supprimer l'usure prématurée de la tuyère.

En effet, le maintien de l'écartement entre le corps et l'embout permet de supprimer les frottements entre l'embout et le corps, lors de leur déplacement relatif, au bénéfice de la durée de vie de la tuyère.

L'organe d'étanchéité permet donc d'améliorer la durée de vie de la tuyère puisque les risques de fuite d'une part, et de chocs subits par la tuyère d'autre part, sont limités.

Enfin, l'organe de compression permet de rendre moins énergivore l'unité de soufflage puisque les risques de fuite sont limités (voire supprimés). Cet organe de compression permet aussi de rendre l'unité de soufflage facilement adaptable à différents types de récipient à fabriquer puisque les changements de l'embout sont facilités grâce à la présence de l'organe d'étanchéité.

La forme d'encoche en L des premiers moyens de retenue et la forme de saillie radiale des deuxièmes moyens de retenue permettent de faciliter le changement de l'embout.

En effet, le changement de l'embout peut être fait par une rotation quart de tour de l'embout par rapport au corps.

Plus particulièrement, il suffit de glisser axialement l'embout en direction du corps puis de le faire pivoter axialement de sorte que les saillies radiales parcourent la première partie du L dans le mouvement de translation puis la deuxième partie du L dans le mouvement de rotation afin de maintenir bloqués l'un contre l'autre l'embout et le corps.

La rotation a pour effet d'assurer la compression de l'organe d'étanchéité qui tend alors à recouvrer sa forme initiale et repousse axialement l'embout par rapport au corps en l'éloignant, ce qui permet le maintien. Le changement d'embout s'en trouve donc facilité et plus rapide que selon l'art antérieur.

Toujours selon ce mode de réalisation, les premiers moyens de retenue comprennent avantageusement deux encoches en L et les deuxièmes moyens de retenue comprennent deux saillies radiales.

La présence de deux encoches en L et de deux saillies radiales permet, outre le montage de type quart de tour de l'embout sur le corps, d'assurer une bonne répartition des efforts.

Cela est d'autant plus vrai lorsque les saillies radiales sont opposées à 180° l'une par rapport à l'autre. Ainsi, l'effort exercé par l'organe d'étanchéité qui tend à recouvrer sa forme initiale est réparti par les deux saillies radiales sur le corps ou, plus précisément, sur les encoches en L du corps.

L'utilisation d'une bague mobile en rotation sur le fût permet d'assurer une simple compression de l'organe d'étanchéité et ainsi d'éviter de l'abîmer lors de chaque changement d'embout.

En effet, puisque c'est la bague qui est mobile en rotation, il n'y a pas de frottement de l'embout sur l'organe d'étanchéité, ce qui provoquerait son abrasion et un risque de fuite lors de l'utilisation de la tuyère et notamment lors du soufflage.

En outre, cela permet de faciliter le changement d'embout puisqu'il suffit de maintenir l'embout axialement sur le fût du corps et ainsi de tourner la bague de sorte à ce que les saillies radiales viennent se loger dans la portion radiale de l'encoche en L.

Selon un aspect avantageux, l'unité de soufflage comprend également un mécanisme de blocage en rotation de la bague sur le fût, le mécanisme de blocage intégrant :
- une première partie portée par le fût ;
- une deuxième partie portée par la bague, et
- un outil de commande.

Le mécanisme de blocage permet de maintenir en position la bague sur le fût pour maintenir solidaire l'embout du corps.

Le mécanisme de blocage permet donc d'éviter que l'embout ne se désolidarise du corps, notamment à cause des vibrations.

Cela participe également à la fiabilité de l'unité de soufflage puisque le maintien solidaire de l'embout sur le corps permet de limiter l'usure de l'organe d'étanchéité, notamment par frottement ainsi que les risques de fuite de fluide sous pression.

En outre, cela évite également les risques d'usure de l'embout, notamment à cause des vibrations de l'unité de soufflage lors de son fonctionnement.

De préférence, la première partie du mécanisme de blocage comprend :
- une cage solidaire du fût ;
- un ergot monté mobile dans la cage et pouvant adopter une position de blocage dans laquelle il fait au moins partiellement saillie de la cage, et
- un élément de rappel monté dans la cage et tendant à repousser l'ergot dans sa position de blocage, la deuxième partie du mécanisme de blocage se présentant sous la forme d'une cavité dans laquelle est reçue l'ergot dans sa position de blocage.

Un tel mécanisme de blocage est simple d'utilisation et permet de bloquer rapidement et simplement la rotation de la bague sur le fût.

Par ailleurs, ce mécanisme est facilement déblocable pour autoriser la rotation de la bague et donc le changement d'embout.

En outre, un tel mécanisme de blocage est purement mécanique, ce qui participe à la fiabilité de l'unité de soufflage.

Préférentiellement, l'outil est une tige, et la bague présente une ouverture débouchant dans la cavité par laquelle l'outil peut être inséré pour repousser l'ergot dans la cage et débloquer le mécanisme de blocage.

L'outil est ainsi simple et peut être remplacé par une clé, un tournevis ou tout autre outil qu'un opérateur de maintenance peut utiliser de manière habituelle.

Avantageusement, l'organe d'étanchéité est un joint torique s'étendant sur une périphérie du fût.

L'utilisation d'un joint torique permet d'assurer une bonne étanchéité tout autour du fût pour empêcher les fuites de fluide sous pression.

En effet, le fût étant tubulaire, son embouchure est ainsi entièrement entourée par l'organe d'étanchéité, ce qui permet d'éviter en tous points les fuites de fluide.

De préférence, le fût présente une rainure annulaire dans laquelle est reçu l'organe d'étanchéité, l'organe d'étanchéité faisant partiellement saillie de la rainure annulaire.

La rainure annulaire permet de retenir l'organe d'étanchéité lors du changement d'embout.

En effet, en étant monté dans la rainure annulaire, l'organe d'étanchéité est amené à suivre l'embout lorsque ce dernier est retiré du corps. Cependant, grâce à la rainure annulaire, l'opérateur n'a pas à se soucier de la présence de l'organe d'étanchéité et peut réaliser le changement d'embout de manière simple et rapide.

En outre, cela évite que l'organe d'étanchéité soit abîmé ou perdu lors du changement d'embout en étant délogé de la rainure.

Les temps de de changement d'embout sont alors minimisés au bénéfice de la productivité.

Avantageusement, l'organe d'étanchéité présente une dureté comprise entre 70 shore A et 90 shore A.

Cette gamme de dureté permet d'assurer la déformation de l'organe d'étanchéité uniquement lors du montage de l'embout sur le corps. Ainsi, lors de l'utilisation de la tuyère, l'organe d'étanchéité ne se déforme pas, ce qui favorise le maintien de l'embout sur le corps.

De préférence, l'organe d'étanchéité présente une dureté de 80 shore A.

Cette dureté particulière offre le meilleur compromis entre déformation pour la facilité de montage et résistance aux efforts lorsque la tuyère est dans la position de soufflage.

D'autres caractéristiques et avantages de l'invention apparaîtront plus clairement à la lecture de la description suivante d'un unique mode de réalisation préférentiel de l'invention, donné à titre d'exemple illustratif et non limitatifs, et des dessins annexés parmi lesquels :
[Fig. 1] la figure 1 est une représentation schématique d'une unité de soufflage selon l'invention, comprenant une tuyère, l'unité de soufflage étant dans une position d'attente ;
[Fig. 2] la figure 2 est une représentation schématique d'une unité de soufflage selon l'invention, l'unité de soufflage étant dans une position de soufflage ;
[Fig. 3] la figure 3 est une représentation schématique en perspective de dessous d'un embout de la tuyère de l'unité de soufflage selon l'invention ;
[Fig. 4] la figure 4 est une représentation schématique en perspective de dessous d'une bague de la tuyère de l'unité de soufflage selon l'invention ;
[Fig. 5] la figure 5 est une représentation schématique en coupe d'un mécanisme de blocage de la tuyère de l'unité de soufflage selon l'invention ;

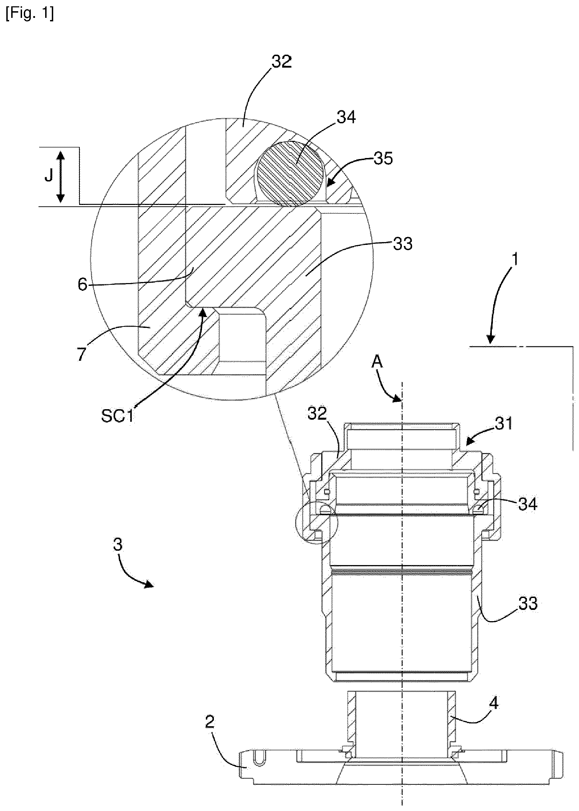

La figure 1 illustre de manière schématique une unité 1 de soufflage selon l'invention.

L'unité 1 de soufflage intègre au moins un moule 2 et une tuyère 3 pour injecter un fluide sous pression dans le moule 2.

Plus particulièrement, le fluide sous pression est injecté à l'intérieur d'une préforme 4, ou ébauche, logée à l'intérieur du moule 2 pour y être soufflée ou étiré-soufflée.

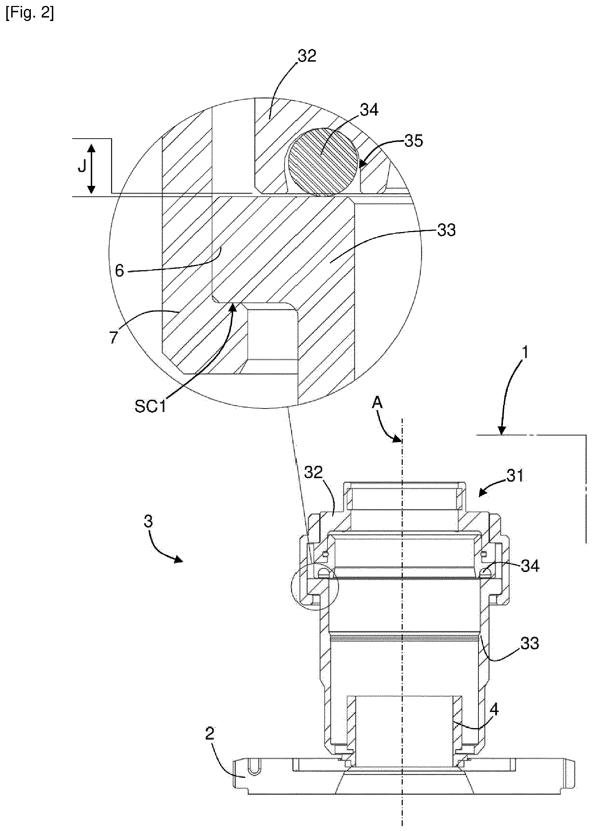

La tuyère 3, telle qu'illustrée les figures 1 et 2, comprend :
- un corps 31 intégrant un fût 32 s'étendant selon un axe A principal, le corps 31 portant des premiers moyens de retenue ;
- un embout 33 tubulaire portant des deuxièmes moyens de retenue.

L'embout 33 tubulaire est destiné à être abouté au corps 31 selon l'axe A principal.

Les deuxièmes moyens de retenue sont alors configurés pour coopérer avec les premiers moyens de retenue pour limiter un débattement axial, c'est-à-dire selon l'axe A principal, de l'embout 33 tubulaire par rapport au corps 31.

La tuyère 3 est mobile entre deux positions :
- une position de soufflage, et
- une position d'attente.

Dans la position de soufflage :
- la tuyère 3 coopère avec le moule 2, et
- l'embout 33 tubulaire est plaqué contre le moule 2 par le corps 31 (figure 2).

Dans la position d'attente :
- la tuyère 3 est écartée du moule 2,
- et l'embout 33 tubulaire est espacé du corps 31 et définit un jeu J fonctionnel avec le corps 31.

La position d'attente est notamment utilisée pour permettre l'insertion dans le moule 2 d'une préforme 4 et l'extraction hors du moule 2 d'un récipient formé.

En référence aux figures 1 et 2, la tuyère 3 comprend également un organe 34 d'étanchéité élastiquement déformable.

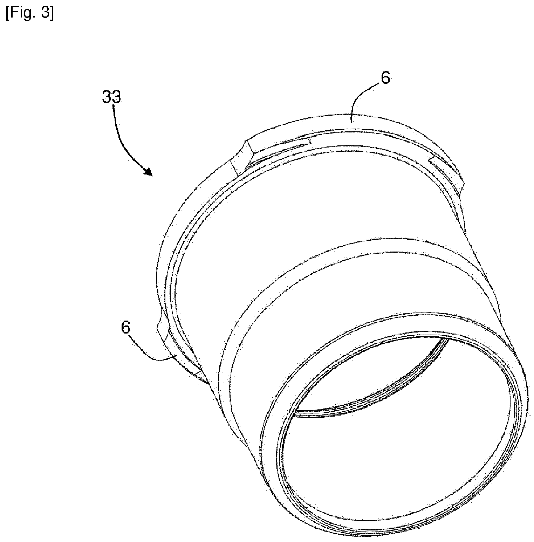

Tel qu'illustré sur la figure 3, l'organe 34 d'étanchéité est intercalé axialement, c'est-à-dire selon l'axe A principal, entre le corps 31 et l'embout 33 tubulaire.

Lors de la mise en place de l'embout 33 tubulaire sur le corps 31, l'organe 34 d'étanchéité est comprimé et voit son épaisseur modifiée. En revanche, dans la position d'attente et dans la position de soufflage de la tuyère 3, le jeu J fonctionnel reste constant.

Plus précisément, dans la position de soufflage de la tuyère 3, l'organe 34 d'étanchéité reste comprimé entre le corps 31 et l'embout 33 tubulaire et assure une étanchéité fluidique entre le corps 31 et l'embout 33 tubulaire.

L'organe 34 d'étanchéité permet ainsi le passage du fluide au travers de la tuyère 3 jusqu'à atteindre le moule 2 sans pouvoir fuir au niveau de la jonction entre l'embout 33 tubulaire et le corps 31.

En revanche, dans la position d'attente de la tuyère 3, l'organe 34 d'étanchéité reste comprimé, et tend à écarter axialement, c'est-à-dire selon l'axe A principal, l'embout 33 tubulaire par rapport au corps 31.

Ainsi, on constate qu'en fonctionnement, le jeu J fonctionnel définit entre l'embout 33 tubulaire et le corps reste constant durant l'utilisation de la tuyère 3.

Pour permettre ce maintien constant du jeu J fonctionnel, l'organe 34 d'étanchéité présente une dureté comprise entre 70 shore A et 90 shore A.

De préférence, l'organe 34 d'étanchéité présente une dureté de 80 shore A. Comme expliqué ci-après, cette dureté particulière offre un bon compromis entre écrasement de l'organe 34 d'étanchéité lors de la phase de montage de l'embout 33 sur le corps 31, et résistance aux efforts de compression lors de l'utilisation de la tuyère 3.

Selon le mode de réalisation illustré sur les figures 1 et 2, les premiers moyens de retenue se présentent sous la forme d'encoches 5 en L et les deuxièmes moyens de retenue se présentent sous la forme de saillies 6 radiales.

Plus particulièrement, les premiers moyens de retenue comprennent deux encoches 5 en L et les deuxièmes moyens de retenue comprennent deux saillies 6 radiales.

Les saillies 6 radiales définissant les deuxièmes moyens de retenue sont donc portées par l'embout 33 tubulaire. Plus précisément, les saillies 6 radiales sont situées à une extrémité supérieure de l'embout 33 tubulaire, cette extrémité supérieure venant en regard du corps 31.

Les deux saillies 6 radiales sont avantageusement opposées l'une à l'autre.

Tel qu'illustré sur les figures 1 et 2, le corps 31 comprend une bague 7 mobile en rotation sur le fût 32 selon l'axe A principal.

Les premiers moyens de retenue sont alors portés par ladite bague 7.

Plus précisément, la bague 7 présente dans son épaisseur deux découpes 71 formant les encoches 5 en L des premiers moyens de retenue.

A l'instar des deux saillies 6 radiales des deuxièmes moyens de retenue, les encoches 5 en L sont opposées diamétralement l'une par rapport à l'autre. Les encoches 5 en L sont ainsi destinées à recevoir les saillies 6 radiales pour permettre le maintien en position et le blocage en position de l'embout 33 tubulaire sur le corps 31.

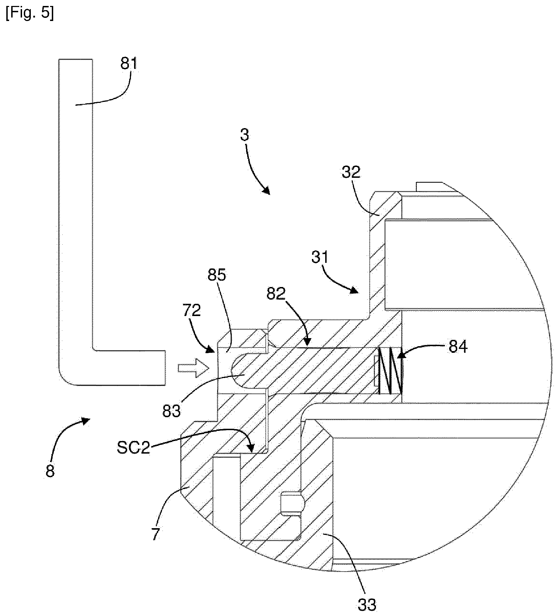

Tel que cela est illustré sur la figure 5, l'unité 1 de soufflage comprend également un mécanisme 8 de blocage en rotation de la bague 7 sur le fût 32.

Le mécanisme 8 de blocage intègre :
- une première partie portée par le fût 32 ;
- une deuxième partie portée par la bague 7, et
- un outil 81 de commande.

Plus en détails, la première partie du mécanisme 8 de blocage comprend :
- une cage 82 solidaire du fût 32 ;
- un ergot 83 monté mobile dans la cage 82 et pouvant adopter une position de blocage dans laquelle il fait au moins partiellement saillie de la cage 82, et
- un élément 84 de rappel monté dans la cage 82 et tendant à repousser l'ergot 83 dans sa position de blocage.

La deuxième partie du mécanisme 8 de blocage se présente sous la forme d'une cavité 85 dans laquelle est reçu l'ergot 83 dans sa position de blocage.

La cavité 85 est donc pratiquée dans la bague 7.

Tel que cela est décrit ci-après, la bague 7 présente une ouverture 72 débouchant dans la cavité 85 pour permettre la manipulation de l'ergot 83.

L'outil 81 du mécanisme 8 de blocage est avantageusement une tige.

La tige 81 peut être insérée dans l'ouverture 72 de la bague 7 débouchant dans la cavité 85 pour repousser l'ergot 83 dans la cage 82 et débloquer le mécanisme 8 de blocage.

Selon une variante de réalisation non illustrée sur les figures, l'outil 81 se présente sous la forme d'un pion élastiquement déformable et solidaire de la bague 7. Dans ce cas, le pion est situé à l'extérieur de la bague 7 et peut adopter une position déformée dans laquelle il pénètre à l'intérieur de l'ouverture 72 pour coopérer et repousser l'ergot 83 dans la cage 82 afin de débloquer le mécanisme 8 de blocage.

L'organe 34 d'étanchéité est un joint torique s'étendant sur la périphérie du fût 32 du corps 31 de la tuyère 3.

A cet effet, le fût 32 présente une rainure 35 annulaire dans laquelle est reçu l'organe 34 d'étanchéité.

Tel que cela est illustré sur les figures 1 et 2, l'organe 34 d'étanchéité fait alors partiellement saillie de la rainure 35 annulaire. La saillie de l'organe 34 d'étanchéité est réalisée selon l'axe A principal.

Les encoches 5 en L présentent deux portions.

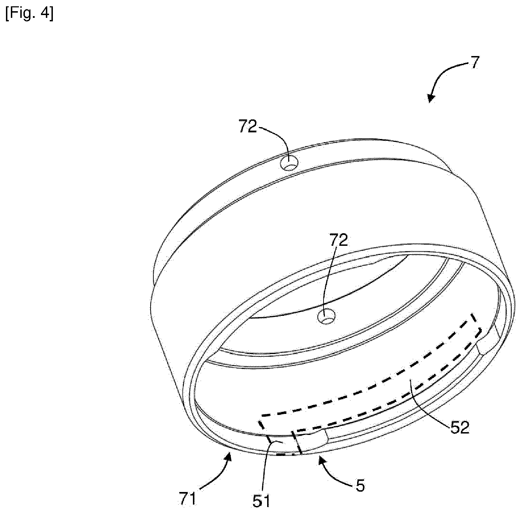

Plus précisément, tel qu'illustré sur la figure 4, les encoches 5 en L présentent une première portion 51 s'étendant selon l'axe A principal, et une deuxième portion 52 s'étendant transversalement à la première portion 51, à l'intérieur de la bague 7.

En d'autres termes, la deuxième portion 52 des encoches en L s'étend sur une portion angulaire de la bague 7.

La deuxième portion 52 des encoches 5 en L présente une forme allant en s'amincissant en s'éloignant de la première portion 51.

Cette forme allant en s'amincissant permet, comme décrit ci-après, d'assurer un déplacement de l'embout 33 tubulaire axialement en direction du fût 32 pour permettre le bon maintien de l'embout 33 tubulaire sur le corps 31 et l'écrasement de l'organe 34 d'étanchéité.

L'installation d'un embout 33 tubulaire sur le corps 31 de la tuyère 3 se fait comme suit.

Dans un premier temps, un opérateur positionne l'embout 33 tubulaire à installer axialement en regard du fût 32 du corps 31 de la tuyère 3.

Dans un second temps, l'opérateur fait translater selon l'axe A principal l'embout 33 tubulaire en direction du fût 32 de sorte à plaquer l'embout 33 tubulaire contre l'organe 34 d'étanchéité.

Durant ce mouvement de translation, la coopération des premiers moyens et des deuxièmes moyens de retenue s'opère.

Plus précisément, les saillies 6 radiales pénètrent dans la première portion 51 des encoches 5 en L jusqu'à venir au fond de celles-ci.

Dans un troisième temps, l'opérateur fait tourner la bague 7 selon l'axe A principal de sorte à engager les saillies 6 radiales dans la deuxième portion 52 des encoches 5 en L.

La forme allant en s'amincissant de la deuxième portion 52 des encoches 5 en L provoque une nouvelle translation de l'embout 33 tubulaire en direction du fût 32, ce qui a pour effet d'exercer une compression de l'organe 34 d'étanchéité.

Lorsque les saillies 6 radiales sont au fond des deuxièmes portions 52 des encoches 5 en L, l'ergot 83 du mécanisme 8 de blocage se trouve dans sa position de blocage, c'est-à-dire logé dans la cavité 85 portée par la bague 7.

Ainsi, malgré la présence de vibrations durant l'utilisation de l'unité 1 de soufflage, le mécanisme 8 de blocage empêche la rotation de la bague 7 autour de l'axe A principal, ce qui a pour effet de maintenir en position l'embout 33 tubulaire contre le corps 31 de la tuyère 3.

Seule l'utilisation de l'outil 81 peut permettre le désengagement de l'ergot 83 hors de la cavité 85, et donc la rotation de la bague 7 pour permettre de retirer l'embout 33 tubulaire du corps 31.

Grâce à la dureté de l'organe 34 d'étanchéité, comprise entre 70 shore A et 90 shore A, les frottements entre l'embout 33 et le corps 31 sont limités par le maintien constant du jeu J fonctionnel.

Plus précisément, tel qu'illustré sur les médaillons de détail des figures 1 et 2, la présence de l'organe 34 d'étanchéité entre l'embout 33 et le corps 31 permet de générer une première surface de contact SC1 entre la bague 7 et l'embout 33.

De même, la présence de l'organe 34 d'étanchéité entre l'embout 33 et le corps 31 permet de générer une deuxième surface de contact SC2 entre la bague 7 et le fût 32 du corps 31, tel qu'illustré sur la figure 5.

Il n'y a donc aucun mouvement relatif entre le corps 31 et l'embout 33 lors de l'utilisation de la tuyère 3 grâce à la première surface de contact SC1 et à la deuxième surface de contact SC2, ce qui évite une usure prématurée de la tuyère 3 et augmente sa durée de vie.

## Revendications

1. Unité (1) de soufflage intégrant au moins un moule (2) et une tuyère (3) pour injecter un fluide sous pression dans le moule (2), la tuyère (3) comprenant :
- un corps (31) intégrant un fût (32) s'étendant selon un axe (A) principal, le corps (31) portant des premiers moyens de retenue ;
- un embout (33) tubulaire, abouté au corps (31) selon l'axe (A) principal, et portant des deuxièmes moyens de retenue coopérant avec les premiers moyens de retenue pour limiter un débattement axial de l'embout (33) par rapport au corps (31), la tuyère (3) étant mobile entre :
- une position de soufflage dans laquelle la tuyère (3) coopère avec le moule (2) et l'embout (33) est plaqué contre le moule (2) par le corps (31), et
- une position d'attente dans laquelle la tuyère (3) est écartée du moule (2), l'embout (33) étant espacé du corps (31) et définissant un jeu (J) fonctionnel avec le corps (31),
la tuyère (3) comprenant, en outre, un organe (34) d'étanchéité élastiquement déformable intercalé, selon l'axe (A) principal, entre le corps (31) et l'embout (33) pour combler le jeu (J) fonctionnel, l'organe (34) d'étanchéité étant comprimé entre le corps (31) et l'embout (33), et tendant à écarter axialement l'embout (33) par rapport au corps (31),
**caractérisée en ce que** les premiers moyens de retenue se présentent sous la forme d'encoches (5) en L et les deuxièmes moyens de retenue se présentent sous la forme de saillies (6) radiales et **en ce que** le corps (31) comprend une bague (7) mobile en rotation sur le fût (32) selon l'axe (A) principal, les premiers moyens de retenue étant portés par la bague (7).

2. Unité (1) de soufflage selon la revendication précédente, **caractérisée en ce que** les premiers moyens de retenue comprennent deux encoches (5) en L et les deuxièmes moyens de retenue comprennent deux saillies (6) radiales.

3. Unité (1) de soufflage selon la revendication 1, **caractérisée en ce qu'**elle comprend également un mécanisme (8) de blocage en rotation de la bague (7) sur le fût (32), le mécanisme (8) de blocage intégrant :
- une première partie portée par le fût (32) ;
- une deuxième partie portée par la bague (7), et
- un outil (81) de commande.

4. Unité (1) de soufflage selon la revendication précédente, **caractérisée en ce que** la première partie du mécanisme de blocage comprend :
- une cage (82) solidaire du fût (32) ;
- un ergot (83) monté mobile dans la cage (82) et pouvant adopter une position de blocage dans laquelle il fait au moins partiellement saillie de la cage (82), et
- un élément (84) de rappel monté dans la cage (82) et tendant à repousser l'ergot (83) dans sa position de blocage, la deuxième partie du mécanisme (8) de blocage se présentant sous la forme d'une cavité (85) dans laquelle est reçue l'ergot (83) dans sa position de blocage.

5. Unité (1) de soufflage selon les revendications 3 et 4, **caractérisée en ce que** l'outil (81) est une tige, et **en ce que** la bague (7) présente une ouverture (72) débouchant dans la cavité (85) par laquelle l'outil (81) peut être inséré pour repousser l'ergot (83) dans la cage (82) et débloquer le mécanisme (8) de blocage.

6. Unité (1) de soufflage selon l'une quelconque des revendications précédentes, **caractérisée en ce que** l'organe (34) d'étanchéité est un joint torique s'étendant sur une périphérie du fût (32).

7. Unité (1) de soufflage selon la revendication précédente, **caractérisée en ce que** le fût (32) présente une rainure (35) annulaire dans laquelle est reçu l'organe (34) d'étanchéité, l'organe (34) d'étanchéité faisant partiellement saillie de la rainure (35) annulaire.

8. Unité (1) de soufflage selon l'une quelconque des revendications précédentes, **caractérisée en ce que** l'organe (34) d'étanchéité présente une dureté comprise entre 70 shore A et 90 shore A.

9. Unité (1) de soufflage selon l'une quelconque des revendications précédentes, **caractérisée en ce que** l'organe (34) d'étanchéité présente une dureté de 80 shore A.

## Patentansprüche

1. Blaseinheit (1), die mindestens eine Form (2) beinhaltet und eine Düse (3), um ein Medium unter Druck in die Form (2) einzuspritzen, wobei die Düse (3) umfasst:
- einen Körper (31), der einen Schaft (32) beinhaltet, der sich entlang einer Hauptachse (A) erstreckt, wobei der Körper (31) erste Rückhaltemittel trägt;
- ein rohrförmiges Endstück (33), das an den Körper (31) entlang der Hauptachse (A) angefügt ist und zweite Rückhaltemittel trägt, die mit den ersten Rückhaltemitteln zusammenwirken, um eine axiale Auslenkung des Endstücks (33) in Bezug auf den Körper (31) zu begrenzen, wobei die Düse (3) beweglich ist zwischen:
- einer Blasposition, in der die Düse (3) mit der Form (2) zusammenwirkt und das Endstück (33) durch den Körper (31) gegen die Form (2) gepresst wird, und
- einer Warteposition, in der die Düse (3) von der Form (2) beabstandet ist, wobei das Endstück (33) von dem Körper (31) entfernt ist und ein Funktionsspiel (J) mit dem Körper (31) definiert,
wobei die Düse (3) ferner ein elastisch verformbares Dichtungsorgan (34) umfasst, das entlang der Hauptachse (A) zwischen den Körper (31) und das Endstück (33) gesetzt ist, um das Funktionsspiel (J) auszufüllen, wobei das Dichtungsorgan (34) zwischen dem Körper (31) und dem Endstück (33) zusammengedrückt wird und dazu neigt, das Endstück (33) in Bezug auf den Körper (31) axial zu beabstanden,
**dadurch gekennzeichnet, dass** die ersten Rückhaltemittel in Form von L-förmigen Aussparungen (5) vorliegen und die zweiten Rückhaltemittel in Form von radialen Vorsprüngen (6) vorliegen, und dadurch, dass der Körper (31) einen auf dem Schaft (32) entlang der Hauptachse (A) drehbeweglichen Ring (7) umfasst, wobei die ersten Rückhaltemittel von dem Ring (7) getragen werden.

2. Blaseinheit (1) nach dem vorhergehenden Anspruch, **dadurch gekennzeichnet, dass** die ersten Rückhaltemittel zwei L-förmige Aussparungen (5) umfassen und die zweiten Rückhaltemittel zwei radiale Vorsprünge (6) umfassen.

3. Blaseinheit (1) nach Anspruch 1, **dadurch gekennzeichnet, dass** sie auch einen Mechanismus (8) zur Drehblockierung des Rings (7) auf dem Schaft (32) umfasst, wobei der Blockiermechanismus (8) beinhaltet:
- einen ersten Teil, der von dem Schaft (32) getragen wird;
- einen zweiten Teil, der von dem Ring (7) getragen wird, und
- ein Betätigungswerkzeug (81).

4. Blaseinheit (1) nach dem vorhergehenden Anspruch, **dadurch gekennzeichnet, dass** der erste Teil des Blockiermechanismus umfasst:
- einen Käfig (82), der einstückig mit dem Schaft (32) ist;
- eine Nase (83), die in dem Käfig (82) beweglich gelagert ist und eine Blockierposition einnehmen kann, in der sie mindestens teilweise aus dem Käfig (82) herausragt, und
- ein Rückstellelement (84), das in dem Käfig (82) gelagert ist und dazu neigt, die Nase (83) in ihre Blockierposition zurückzuschieben,
wobei der zweite Teil des Blockiermechanismus (8) in Form eines Hohlraums (85) vorliegt, in dem die Nase (83) in ihrer Blockierposition aufgenommen ist.

5. Blaseinheit (1) nach den Ansprüchen 3 und 4, **dadurch gekennzeichnet, dass** das Werkzeug (81) eine Stange ist und dass der Ring (7) eine Öffnung (72) aufweist, die in dem Hohlraum (85) mündet, durch die das Werkzeug (81) eingeführt werden kann, um die Nase (83) in den Käfig (82) zurückzuschieben und den Blockiermechanismus (8) zu entriegeln.

6. Blaseinheit (1) nach einem der vorhergehenden Ansprüche, **dadurch gekennzeichnet, dass** das Dichtungsorgan (34) ein O-Ring ist, der sich über einen Umfang des Schafts (32) erstreckt.

7. Blaseinheit (1) nach dem vorhergehenden Anspruch, **dadurch gekennzeichnet, dass** der Schaft (32) eine ringförmige Rille (35) aufweist, in der das Dichtungsorgan (34) aufgenommen ist, wobei das Dichtungsorgan (34) teilweise aus der ringförmigen Rille (35) herausragt.

8. Blaseinheit (1) nach einem der vorhergehenden Ansprüche, **dadurch gekennzeichnet, dass** das Dichtungsorgan (34) eine Härte zwischen 70 Shore A und 90 Shore A aufweist.

9. Blaseinheit (1) nach einem der vorhergehenden Ansprüche, **dadurch gekennzeichnet, dass** das Dichtungsorgan (34) eine Hörte von 80 Shore A aufweist.

## Claims

1. Blowing unit (1) incorporating at least one mould (2) and a pipe (3) for injecting a pressurized fluid into the mould (2), the pipe (3) comprising:
- a body (31) incorporating a barrel (32) extending along a main axis (A), the body (31) bearing first retaining means;
- a tubular end fitting (33), butting against the body (31) along the main axis (A), and bearing second retaining means cooperating with the first retaining means so as to limit an axial travel of the end fitting (33) with respect to the body (31), the pipe (3) being movable between:
- a blowing position in which the pipe (3) cooperates with the mould (2) and the end fitting (33) is pressed against the mould (2) by the body (31), and
- a standby position in which the pipe (3) is spaced apart from the mould (2), the end fitting (33) being spaced apart from the body (31) and defining a functional clearance (J) with the body (31),
the pipe (3) further comprising an elastically deformable sealing member (34) interposed, along the main axis (A), between the body (31) and the end fitting (33) so as to fill the functional clearance (J), the sealing member (34) being compressed between the body (31) and the end fitting (33), and tending to space the end fitting (33) axially apart from the body (31),
**characterized in that** the first retaining means are in the form of L-shaped slots (5) and the second retaining means are in the form of radial projections (6), and **in that** the body (31) comprises a ring (7) which is able to rotate on the barrel (32) along the main axis (A), the first retaining means being borne by the ring (7).

2. Blowing unit (1) according to the preceding claim, **characterized in that** the first retaining means comprise two L-shaped slots (5) and the second retaining means comprise two radial projections (6).

3. Blowing unit (1) according to Claim 1, **characterized in that** it also comprises a mechanism (8) for blocking the rotation of the ring (7) on the barrel (32), the blocking mechanism (8) incorporating:
- a first part borne by the barrel (32);
- a second part borne by the ring (7), and
- a control tool (81).

4. Blowing unit (1) according to the preceding claim, **characterized in that** the first part of the blocking mechanism comprises:
- a cage (82) secured to the barrel (32);
- a lug (83) which is movably mounted in the cage (82) and is able to adopt a blocking position in which it at least partially protrudes from the cage (82), and
- a return element (84) which is mounted in the cage (82) and tends to push the lug (83) into its locking position,
the second part of the blocking mechanism (8) being in the form of a cavity (85) in which the lug (83) is received in its blocking position.

5. Blowing unit (1) according to Claims 3 and 4, **characterized in that** the tool (81) is a stem, and **in that** the ring (7) has an opening (72), leading into the cavity (85), through which the tool (81) can be inserted in order to push the lug (83) into the cage (82) and release the blocking mechanism (8).

6. Blowing unit (1) according to any one of the preceding claims, **characterized in that** the sealing member (34) is an O-ring extending over a periphery of the barrel (32).

7. Blowing unit (1) according to the preceding claim, **characterized in that** the barrel (32) has an annular groove (35) in which the sealing member (34) is received, the sealing member (34) partially protruding from the annular groove (35).

8. Blowing unit (1) according to any one of the preceding claims, **characterized in that** the sealing member (34) has a hardness of between 70 Shore A and 90 Shore A.

9. Blowing unit (1) according to any one of the preceding claims, **characterized in that** the sealing member (34) has a hardness of 80 Shore A.
